# FASCICULE DE BREVET EUROPEEN

(11) **EP 2 217 345 B1**
(45) Date de publication et mention de la délivrance du brevet: **07.03.2012**
(21) Numéro de dépôt: 08871223.7
(22) Date de dépôt: 06.11.2008
(51) Int. Cl.: B01D 15/22, G01N 30/42, B01D 15/18

(54) **DISPOSITIF DE CHROMATOGRAPHIE DE PARTAGE CENTRIFUGE ET PROCEDE MIS EN OEUVRE PAR CE DISPOSITIF**
CHROMATOGRAPHIEVORRICHTUNG MIT ZENTRIFUGALER AUFTEILUNG UND FÜR DIESE VORRICHTUNG IMPLEMENTIERTES VERFAHREN
CENTRIFUGAL PARTITIONING CHROMATOGRAPHY DEVICE AND METHOD IMPLEMENTED BY THIS DEVICE

(30) Priorité: 13.11.2007 FR 0707975
(43) Date de publication de la demande: 18.08.2010
(73) Titulaire: Centre National de la Recherche Scientifique, 75016 Paris (FR); L'UNIVERSITE DE NANTES, 44035 Nantes (FR)
(72) Inventeur: FOUCAULT, Alain Paul Olivier, F-44600 Saint-nazaire (FR); LEGRAND, Jack, F-44600 Saint-nazaire (FR); MARCHAL, Luc, F-44600 Saint-Nazaire (FR); AGAISE, Charles, Elie, Pierre, F-44300 Nantes (FR)
(74) Mandataire: Bolinches, Michel Jean-Marie
(86) Numéro de dépôt international: PCT/FR2008/001561
(87) Numéro de publication internationale: WO 2009/092914

(56) Documents cités:
- FR-A- 2 791 578
- JP-A- 56 016 868
- US-A- 4 968 428
- IKEHATA J-I ET AL: "Effect of Coriolis force on counter-current chromatographic separation by centrifugal partition chromatography" JOURNAL OF CHROMATOGRAPHY, ELSEVIER SCIENCE PUBLISHERS B.V. AMSTERDAM, NL, vol. 1025, no. 2, 6 février 2004 (2004-02-06), pages 169-175, XP004482094 ISSN: 0021-9673

## Description

La présente invention concerne un dispositif de chromatographie de partage centrifuge d'un liquide à au moins deux phases, et un procédé de chromatographie de partage centrifuge mis en oeuvre par ce dispositif. L'invention concerne en particulier la séparation liquide-liquide de deux phases non miscibles au contact l'une de l'autre.

La chromatographie de partage centrifuge (« CPC » en abrégé pour « Centrifugal Partition Chromatography ») est une méthode de séparation des composés d'un mélange entre une phase mobile et une phase stationnaire pour chacune desquelles les composés ont une affinité différente. Les dispositifs de chromatographie connus comportent un empilement d'anneaux plats qui sont entraînés en rotation autour de leur axe de symétrie et qui comportent chacun dans un plan perpendiculaire à cet axe une multitude de cellules reliées entre elles par des conduits ou canaux d'entrée/ sortie par exemple gravés sur ces anneaux. La phase stationnaire est maintenue immobile à l'intérieur des cellules par l'intermédiaire de la force centrifuge à laquelle elle est soumise du fait de la rotation des anneaux, pendant que la phase mobile percole cette phase stationnaire. On pourra par exemple se référer au document FR-A-2 791 578 pour la description d'un tel dispositif.

Ces dispositifs présentent un gain significatif de productivité, en comparaison des dispositifs de chromatographie liquide à haute performance (« HPLC » pour « High Performance Liquid Chromatography ») à colonne garnie, notamment du fait des avantages suivants :
- absence de phase stationnaire solide (relativement coûteuse), avec à la place une phase stationnaire liquide dont la régénération ou le remplacement sont réalisables en un temps très court, et
- taux de phase stationnaire nettement supérieur, ce qui retarde l'apparition indésirable de phénomènes non linéaires et se traduit par une augmentation en proportion de la capacité de la colonne en permettant l'élution des composés à des concentrations augmentées avec une consommation de phase mobile inversement proportionnelle.

On a cherché ces dernières années à améliorer l'efficacité de ces dispositifs de « CPC » afin d'optimiser les séparations obtenues, sachant que cette efficacité repose essentiellement sur l'écoulement de la phase mobile à travers la phase stationnaire. On ainsi mis en évidence l'effet de l'accélération de Coriolis générée par la rotation des anneaux sur les écoulements biphasiques observés dans les cellules, comme présenté notamment dans l'article Mass Transport and Flow Regimes in Centrifugal Partition Chromatography, par L. Marchal, J. Legrand, A. Foucault, AlChE J.,48 (2002) 1692. Plus précisément, chaque cellule peut être divisée en trois zones comprenant une zone d'entrée où doit être favorisée la dispersion de la phase mobile provenant du canal d'entrée sous forme de gouttelettes, une zone intermédiaire de mouvement curvilinéaire de ces gouttelettes et une zone de sortie où doit être favorisée la coalescence des gouttelettes avant le transfert de la phase mobile dans le canal de sortie.

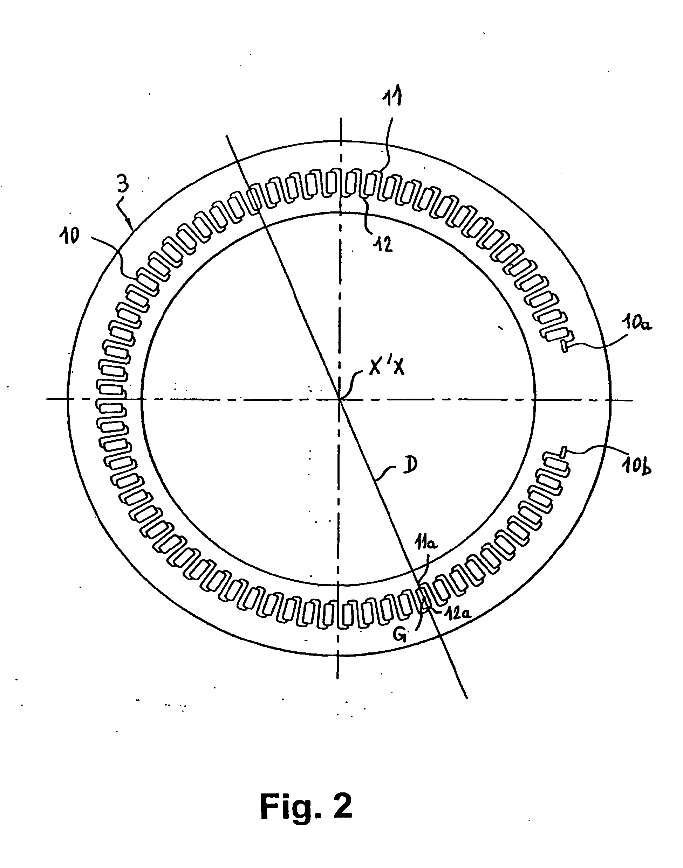

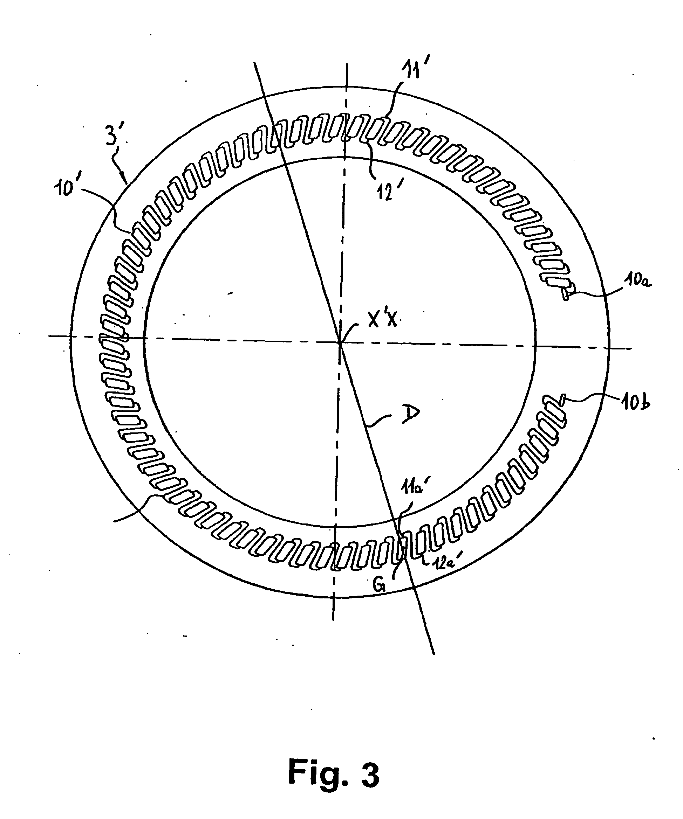

Les figures 2 et 3 jointes, qui se réfèrent au document FR-A-2 791 578 précité, illustrent l'agencement usuel des deux canaux d'entrée/ sortie 11 et 12, 11' et 12' de chaque cellule 10, 10' par rapport à une droite radiale D de l'anneau 3, 3' correspondant passant par son axe de rotation X'X et par le barycentre G de la cellule 10, 10'. On voit à la figure 2 que les deux orifices d'entrée/ sortie 11a et 12a par lesquels ces canaux 11 et 12 débouchent respectivement dans chaque cellule 10 sont situés tous deux sur cette droite radiale D de l'anneau 3 et, à la figure 3, que les deux orifices d'entrée/ sortie 11 a', 12a' de chaque cellule 10' de l'anneau 3' sont situés de part et d'autre de cette droite D (sont également visibles aux figures 2 et 3 les deux cellules d'entrée et de sortie 10a et 10b de l'anneau 3, 3').

De manière connue, un écoulement du liquide du côté radialement externe vers le côté radialement interne de chaque cellule (i.e. de la périphérie vers le centre) représente pour l'empilement d'anneaux un écoulement ascendant, alors qu'à l'inverse un écoulement vers le côté radialement externe de chaque cellule (i.e. du centre vers la périphérie) représente un écoulement descendant, le sens de l'écoulement étant déterminé par le rapport des masses de la phase mobile et de la phase stationnaire.

Un but de la présente invention est de proposer un dispositif de chromatographie de partage centrifuge d'un liquide à au moins deux phases présentant une efficacité chromatographique améliorée en comparaison de celle des dispositifs existants, et ce but est atteint en ce que la Demanderesse vient de découvrir d'une manière inattendue que si l'on choisit d'agencer ces orifices d'entrée/ sortie de chaque cellule non pas sur la droite radiale, ni de part et d'autre de celle-ci contrairement à l'état de la technique, mais d'un même côté de cette droite radiale, alors on améliore d'une manière significative la coalescence des gouttelettes dans la zone de sortie de cellule au terme de leur trajectoire curviligne, du fait de la déviation qu'implique l'accélération de Coriolis en fonction du sens de rotation des cellules, ce qui se traduit par une efficacité nettement accrue de la chromatographie.

A cet effet, un dispositif de chromatographie de partage centrifuge selon l'invention, qui comporte au moins un anneau plat apte à être entraîné en rotation autour de son axe de symétrie et comprenant une multitude de cellules destinées à être parcourues par le liquide, chaque cellule étant pourvue de deux canaux d'entrée/ sortie destinés à faire circuler le liquide d'une cellule à une autre et débouchant respectivement par deux orifices d'entrée/ sortie de la cellule en deux côtés radialement interne et externe de cette dernière par rapport audit axe, est tel que pour au moins une partie de cette multitude de cellules, les orifices débouchant dans une même cellule sont agencés d'un même côté latéral de la droite radiale de l'anneau passant par ledit axe et par le barycentre de cette cellule, vue en section radiale.

On notera que cette section radiale (i.e. perpendiculaire à cet axe) de chaque cellule concernée pour la détermination de son barycentre, sous-entend que chaque cellule présente une section radiale constante le long de sa direction parallèle à l'axe de rotation du ou de chaque anneau.

On notera également qu'il serait possible de remplacer cette droite radiale par un plan radial contenant à la fois cet axe de rotation et le centre de gravité de chaque cellule tridimensionnelle concernée, en tenant compte de l'épaisseur de celle-ci dans la direction de cet axe et donc sans faire référence à une section radiale de cellule.

Par côté latéral de cette droite radiale, on entend dans la présente description chacun des deux côtés sensiblement radiaux de chaque cellule qui relient lesdits côtés radialement interne et externe entre eux.

Avantageusement, chacune des cellules du ou de chaque anneau a ses deux orifices d'entrée/ sortie agencés d'un même côté latéral de ladite droite radiale.

Selon une autre caractéristique de l'invention, pour une même cellule, on peut définir cet agencement desdits orifices strictement d'un même côté de cette droite radiale par le fait que la distance minimale entre ladite droite radiale et celui des deux orifices qui est le plus proche de cette droite est supérieure à la largeur de chaque orifice.

Par « distance minimale », on entend ici la distance mesurée selon une direction perpendiculaire à cette droite radiale (i.e. selon une direction tangentielle pour le ou chaque anneau), et par « largeur de chaque orifice », on entend la plus grande dimension transversale de cet orifice (e.g. le diamètre dans le cas d'un canal hémicylindrique se terminant par un orifice semi-circulaire).

En d'autres termes, on notera que cet agencement selon l'invention desdits orifices d'entrée/ sortie d'un même côté de cette droite radiale est ainsi visible à l'oeil nu.

De préférence, pour une même cellule, le ratio de cette distance minimale sur la longueur de chacun desdits côtés de cellule radialement interne et externe est supérieur ou égal à 5 % et, à titre encore plus préférentiel, ce ratio est supérieur ou égal à 30 %.

On notera que cet agencement selon l'invention des orifices ou sections « débouchantes » des canaux ou conduits d'entrée dans chaque cellule permet d'augmenter nettement l'efficacité de l'opération de séparation mise en oeuvre au moyen de ce dispositif, notamment via l'optimisation de la coalescence en fin de parcours des gouttelettes de phase mobile dans chaque cellule.

On notera également que cet agencement des orifices d'un même côté de ladite droite radiale contribue également à l'obtention d'une stabilité ou rétention améliorée pour la phase stationnaire contenue dans chaque cellule, en particulier à l'échelle industrielle lors de l'injection de quantités élevées de solutés.

Grâce à cet agencement des orifices d'entrée/ sortie de cellules selon l'invention, on peut ainsi avantageusement utiliser des quantités injectées de solutés ou de solutions plus importantes et un débit volumique de liquide plus élevé, lequel entraîne des temps d'élution plus courts que par le passé.

Selon un premier mode de réalisation de l'invention, lesdits côtés de chaque cellule pourvus des orifices d'entrée/ sortie correspondants sont symétriques l'un de l'autre par rapport à un axe de symétrie de cette cellule, le ou chaque anneau étant alors par exemple destiné à être entraîné indifféremment dans le sens horaire pour un écoulement du liquide à travers la cellule allant du côté radialement externe vers le côté radialement interne, ou bien dans le sens antihoraire (i.e. trigonométrique) pour un écoulement du liquide en sens inverse.

On notera que le sens de rotation à utiliser pour le ou chaque anneau selon l'invention - pouvant être tant horaire qu'antihoraire selon ce premier mode - est ici déterminé de manière univoque par le sens d'écoulement réversible du liquide, du fait que la géométrie de chaque cellule est adaptée pour les deux sens d'écoulement du liquide.

Conformément à ce premier mode de l'invention, chaque cellule peut avantageusement présenter une forme sensiblement polygonale vue en section radiale, par exemple sensiblement rectangulaire ou hexagonale, ou bien sensiblement elliptique, à titre non limitatif.

Selon un second mode de réalisation de l'invention, lesdits côtés de chaque cellule pourvus des orifices d'entrée/ sortie correspondants sont asymétriques l'un par rapport à l'autre, le ou chaque anneau étant'alors par exemple destiné être entraîné :
- seulement dans le sens horaire pour un écoulement du liquide à travers la cellule allant du côté radialement externe vers le côté radialement interne, si ce côté interne présente une longueur supérieure à celle du côté externe, ou bien
- seulement dans le sens antihoraire pour un écoulement du liquide en sens inverse si ce côté interne présente une longueur inférieure à cette du côté externe.

Conformément à ce second mode de l'invention, chaque cellule peut avantageusement présenter, à titre non limitatif, une forme sensiblement trapézoïdale vue en section radiale, dont les grande et petite bases sont respectivement formées par lesdits côtés de cellule pourvus desdits orifices d'entrée/ sortie.

On notera que le sens de rotation préférentiel du ou de chaque anneau selon ce second mode - étant uniquement horaire ou uniquement antihoraire du fait de l'asymétrie précitée entre les deux côtés radialement interne et externe de chaque cellule - est ainsi prédéterminé de manière univoque par la géométrie de chaque cellule, laquelle est adaptée pour un seul sens d'écoulement non réversible du liquide.

On notera également que cette asymétrie de chaque cellule est avantageusement conçue pour générer une perturbation de l'écoulement dans la zone d'entrée de cette cellule pour favoriser l'atomisation en gouttelettes de la phase mobile, et au contraire pour réduire les turbulences de cet écoulement dans la zone de sortie pour favoriser la coalescence de ces gouttelettes.

D'une manière générale en référence à ces deux modes de réalisation de l'invention, on notera que ce sens de rotation est inversé lorsque lesdits orifices d'entrée/ sortie de chaque cellule sont tous deux agencés de l'autre côté latéral de ladite droite radiale.

Selon une autre caractéristique de l'invention, le dispositif de chromatographie peut comporter une multitude desdits anneaux plats, avec l'amélioration précitée de l'efficacité chromatographique.

Un procédé de chromatographie de partage centrifuge d'un liquide selon l'invention est mis en oeuvre par un dispositif de l'invention tel que défini ci-dessus, et ce procédé est tel que l'on choisit le sens de rotation du ou de chaque anneau autour dudit axe de rotation en fonction du sens de l'écoulement du liquide à travers chaque cellule, de telle manière que l'on entraîne le ou chaque anneau dans le sens horaire si le liquide s'écoule du côté de cellule radialement externe vers le côté de cellule radialement interne, ou bien dans le sens antihoraire si le liquide s'écoule en sens inverse, ou vice versa si lesdits orifices d'entrée/ sortie de chaque cellule sont agencés de l'autre côté latéral de ladite droite radiale.

Selon une caractéristique essentielle de la présente invention, on notera que l'agencement précité des orifices d'entrée/ sortie de chaque cellule selon l'invention (i.e. d'un même côté de la droite radiale de chaque anneau passant par son axe de rotation et par le barycentre de cette cellule) implique que le choix du sens de rotation imprimé aux anneaux par le rotor du dispositif de chromatographie est dicté par le sens de l'écoulement du liquide à travers chaque cellule. En d'autres termes, pour un agencement des orifices d'entrée/ sortie d'un côté latéral prédéterminé de cette droite radiale de cellule, un sens d'écoulement ascendant (i.e. de la périphérie vers le centre de chaque cellule) impose un sens de rotation du rotor seulement dans le sens horaire, alors qu'un sens d'écoulement descendant (i.e. du centre vers la périphérie de chaque cellule) impose un sens de rotation du rotor seulement dans le sens antihoraire et, pour un agencement de ces orifices de l'autre côté latéral de cette droite radiale, un sens d'écoulement ascendant impose à l'inverse un sens de rotation du rotor seulement dans le sens antihoraire, alors qu'un sens d'écoulement descendant impose un sens de rotation du rotor seulement dans le sens horaire.

Comme indiqué précédemment en référence au premier mode de l'invention, le choix de cellules dont les côtés radialement externe et interne sont symétriques l'un de l'autre par rapport à un axe de symétrie de chaque cellule rend possible l'utilisation au choix des deux sens d'écoulement et, par conséquent, des deux sens de rotation qu'ils impliquent.

En référence au second mode de l'invention, on entraîne le ou chaque anneau dans un seul sens de rotation possible du fait de l'asymétrie entre les côtés radialement externe et interne de chaque cellule, cet entraînement étant réalisé :
- dans le sens horaire, si le liquide s'écoule du côté radialement externe vers le côté radialement interne de chaque cellule, du fait que ce côté interne est d'une longueur supérieure à celle du côté externe, ou inversement (i.e. dans le sens antihoraire) si lesdits orifices d'entrée/ sortie sont agencés de l'autre côté latéral de ladite droite radiale ; et
- dans le sens antihoraire, si le liquide s'écoule du côté radialement interne vers le côté radialement externe de chaque cellule, du fait que ce côté interne présente une longueur inférieure à celle du côté radialement externe, ou inversement (i.e. dans le sens horaire) si lesdits orifices sont agencés de l'autre côté latéral de ladite droite radiale.

Les caractéristiques précitées de la présente invention, ainsi que d'autres, seront mieux comprises à la lecture de la description suivante de plusieurs exemples de réalisation de l'invention, donnés à titre illustratif et non limitatif, ladite description étant réalisée en relation avec les dessins joints, parmi lesquels :
la figure 1 est une vue en coupe axiale dans un plan vertical d'un dispositif de chromatographie de partage centrifuge selon un exemple de réalisation de l'invention,
la figure 2 est une vue schématique de dessus d'un anneau connu utilisable dans le dispositif de la figure 1, où les cellules sont agencées selon l'état antérieur de la technique,
la figure 3 est une vue schématique de dessus d'une variante d'anneau connu utilisable dans le dispositif de la figure 1, où les cellules sont également agencées selon l'état antérieur de la technique,
la figure 4 est une vue schématique partielle et de dessus d'un anneau selon l'invention utilisable dans le dispositif de la figure 1 et conçu pour être entraîné dans les deux sens de rotation, où les cellules sont agencées conformément au premier mode de l'invention,
la figure 5 est une vue schématique partielle et de dessus d'un autre anneau selon ce premier mode de l'invention utilisable dans le dispositif de la figure 1 et conçu pour être entraîné dans les deux sens de rotation, où les cellules sont agencées selon une variante de la figure 4,
la figure 6 est une vue schématique partielle et de dessus d'un autre anneau selon l'invention utilisable dans le dispositif de la figure 1 et conçu pour être entraîné dans le seul sens horaire, où les cellules sont agencées selon le second mode de l'invention, et
la figure 7 est une vue schématique partielle et de dessus d'un autre anneau selon l'invention utilisable dans le dispositif de la figure 1 et conçu pour être entraîné dans le seul sens antihoraire, où les cellules sont également agencées selon ce second mode de l'invention.

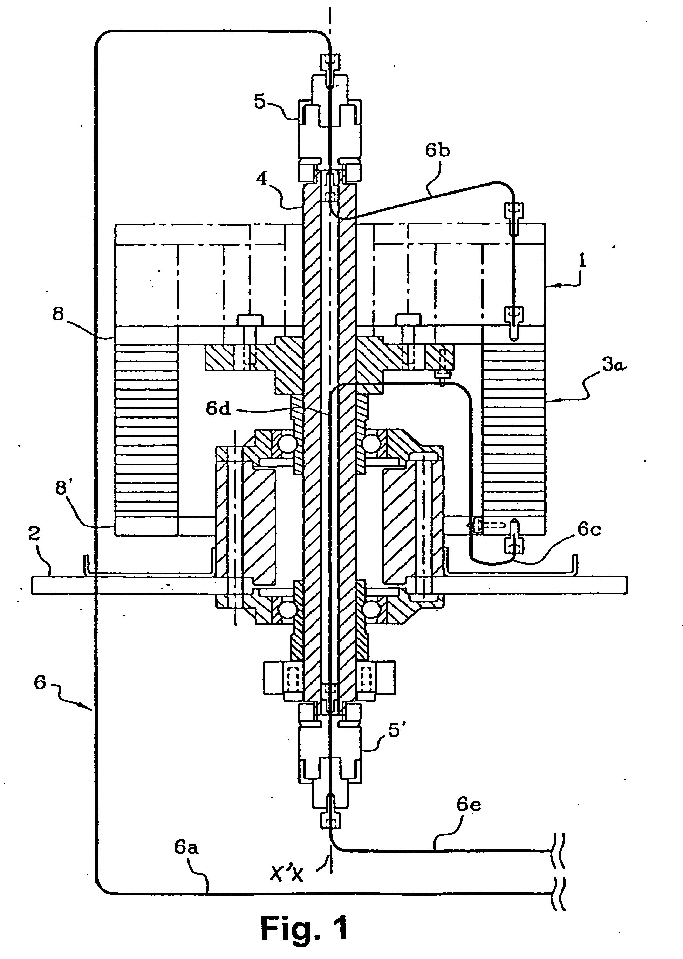

Comme illustré à la figure 1, un dispositif de chromatographie de partage centrifuge selon l'invention comporte un rotor 1 monté sur une table 2 et apte à être entraîné en rotation autour d'un axe X'X disposé verticalement dans l'exemple de la figure 1, par l'intermédiaire de moyens d'entraînement connus et non représentés. Le rotor 1 est constitué de plusieurs anneaux plats empilés 3a, de même diamètre et solidaires d'une colonne 4 de structure connue formée d'un tube creux disposé entre deux joints tournants haut 5 et bas 5'. L'axe de rotation X'X correspond à l'axe des anneaux 3a empilés. La colonne 4 est alimentée en liquide à travers les joints 5 et 5' via un circuit de tuyaux 6 relié à des moyens d'alimentation et de récupération connus et non illustrés.

Le dispositif étant apte à fonctionner selon deux sens d'écoulement respectivement ascendant et descendant, chacun des deux joints tournants 5 et 5' peut constituer soit l'entrée, soit la sortie du système, le trajet du liquide dans le circuit 6 étant matérialisé par un trait gras à la figure 1.

Dans le cas d'un fonctionnement descendant par exemple, une première branche 6a du circuit 6 relie les moyens d'alimentation (tels qu'une pompe) au joint tournant supérieur 5. Après avoir traversé ce joint 5, une deuxième branche 6b amène le liquide jusqu'à l'entrée du rotor 1 et, après l'avoir traversé, ressort en partie basse au niveau de la branche 6c. La branche 6d, située à l'intérieur de la colonne 4, amène le liquide jusqu'au joint tournant inférieur 5' qui, après l'avoir traversé, est récupéré au niveau de la branche 6e, et acheminé vers les moyens de récupération.

Ainsi, le liquide sous pression entre au niveau du joint supérieur 5 pour atteindre par le haut l'empilement d'anneaux 3a en passant par la colonne 4, puis circule à l'intérieur des cellules du premier anneau 3a, puis celles du second et ainsi de suite, pour ressortir au niveau inférieur de l'empilement d'anneaux 3a et traverser la colonne 4 jusqu'au joint tournant inférieur 5'. Si le dispositif fonctionne en mode ascendant, le cheminement du liquide est inversé.

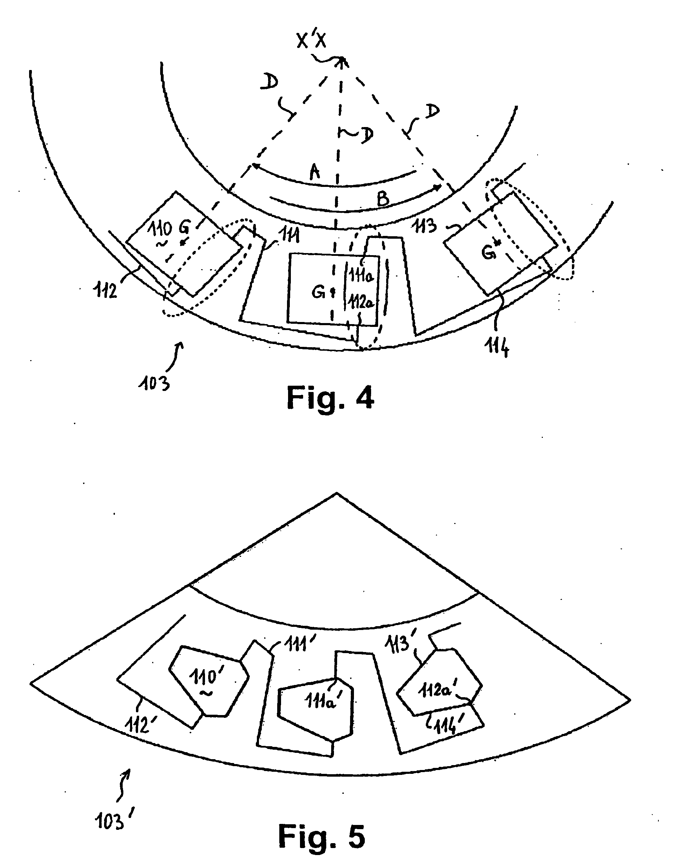

Les figures 4 et 5 illustrent de manière partielle deux exemples d'anneaux 103, 103' dont les cellules 110, 110' sont reliées entre elles par des canaux d'entrée/ sortie 111 et 112, 111' et 112' agencés selon le premier mode de réalisation de l'invention. Comme le montrent les médaillons en pointillés entourant les orifices d'entrée/ sortie 111a et 112a, 111a' et 112a' respectifs des canaux 111 et 112, 111' et 112' dans chacune des trois cellules 110, 110' représentées, ces orifices sont situés d'un même côté latéral de la droite radiale D (représentée par des tirets) de l'anneau 103, 103' passant par son axe de rotation X'X et par le barycentre G de chaque cellule 110, 110', dans une section radiale de cette dernière (i.e. une section horizontale dans l'exemple de ces figures 4 et 5).

Selon une caractéristique importante de l'invention qui est liée à cet agencement des orifices 111 a et 112a, 111 a' et 112a' d'un même côté de la droite D qui dans l'exemple des figures 4 et 5 est le côté droit pour un observateur positionné au-dessus du dispositif, le sens d'écoulement ascendant ou descendant du liquide dans le dispositif (i.e. radialement vers l'intérieur ou radialement vers l'extérieur de chaque cellule 110, 110' respectivement) dicte le choix du sens de rotation des anneaux 103, 103' via l'entraînement du rotor 1.

Dans le premier exemple d'anneaux 103 selon la figure 4, chaque cellule 110 présente en section radiale une forme rectangulaire délimitée radialement par deux grands côtés radialement interne 113 et externe 114 qui sont perpendiculaires à la direction radiale de la droite D, et les orifices d'entrée/ sortie 111 a et 112a sont chacun distants de cette droite D d'une distance qui, mesurée selon ces grands côtés 113 et 114, est supérieure à 30 % de la longueur de ces côtés 113 et 114.

Du fait de la symétrie de chaque cellule 110 par rapport à son axe longitudinal de symétrie parallèle aux grands côtés 113 et 114, qui signifie que ces derniers et les orifices 111 a et 112a dont ils sont pourvus sont de même longueur et agencés à l'identique, on peut utiliser au choix le dispositif incorporant les anneaux 103 de la figure 4 dans l'un ou l'autre des deux sens d'écoulement ascendant et descendant, étant précisé que :
- si l'on fait circuler le liquide dans le sens ascendant (i.e. du côté externe 114 vers le côté interne 113 de chaque cellule 110) alors on choisit de faire tourner les anneaux 103 dans le sens horaire (flèche A) dans l'exemple de la figure 4, et que
- si l'on fait circuler le liquide dans le sens descendant (i.e. du côté interne 113 vers le côté externe 114 de chaque cellule 110) alors on choisit de faire tourner les anneaux 103 dans le sens antihoraire (flèche B) toujours dans l'exemple de la figure 4.

Ce libre choix du sens d'écoulement et donc du sens de rotation qui en résulte pour les anneaux 103 est dû au fait que les zones d'entrée et de sortie de chaque cellule 110, où sont respectivement réalisées la dispersion des gouttelettes de phase mobile pénétrant dans la cellule 110 et leur coalescence avant d'en sortir, sont interchangeables (i.e. réversibles pour le sens d'écoulement du liquide) du fait de la symétrie précitée.

Dans le second exemple de la figure 5, chaque cellule 110' présente en section radiale une forme hexagonale délimitée radialement par deux paires de grands côtés qui sont respectivement radialement interne 113' et externe 114' pour la cellule 110' et qui sont symétriques l'une de l'autre par rapport à l'axe longitudinal de symétrie de la cellule 110'.

A l'instar de l'exemple de la figure 4, il résulte de cette symétrie que l'on peut utiliser au choix le dispositif incorporant les anneaux 103' de la figure 5 dans l'un ou l'autre des deux sens d'écoulement, étant précisé que dans le sens ascendant (i.e. du côté externe 114' vers le côté interne 113' de chaque cellule 110) on choisit de faire tourner les anneaux 103' dans le sens horaire dans l'exemple de la figure 5, alors que dans le sens descendant (i.e. du côté interne 113' vers le côté externe 114') on choisit de faire tourner les anneaux 103' dans le sens antihoraire selon ce même exemple.

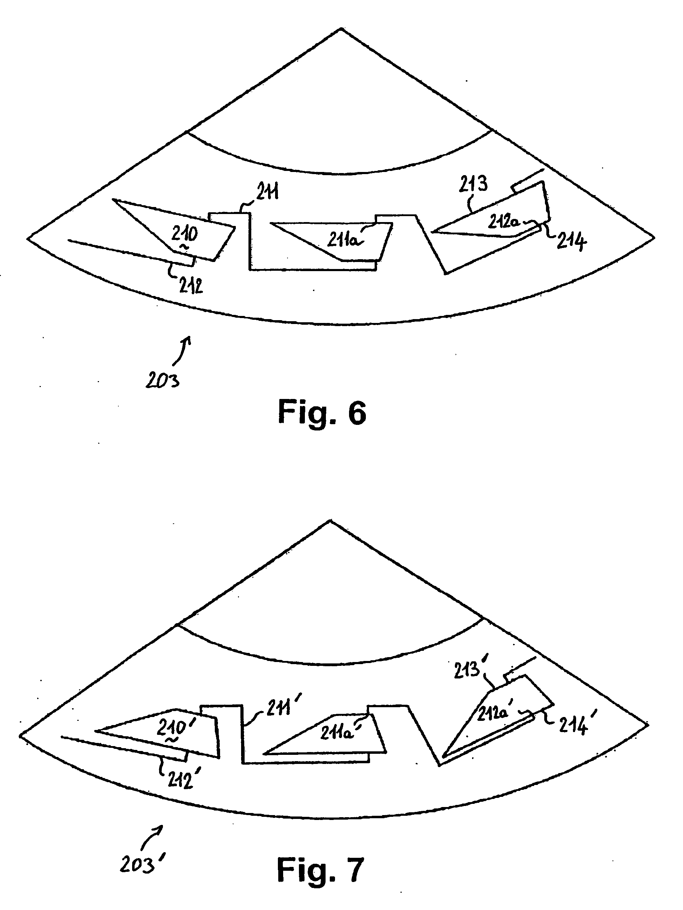

Dans le second mode de l'invention illustré aux figures 6 et 7, chaque cellule 210, 210' de l'anneau 203, 203' présente une forme asymétrique qui est par exemple trapézoïdale vue en section radiale, et dont :
- à la figure 6, la grande base 213 et la petite base 214 forment respectivement les côtés radialement interne et externe de chaque cellule 210 pourvus des orifices d'entrée/ sortie 211a et 212a, ces cellules 210 étant spécifiquement conçues pour un écoulement de liquide uniquement ascendant (i.e. de la petite base 214 à la grande base 213, pour favoriser l'atomisation et la coalescence des gouttelettes de phase mobile en entrée et en sortie de cellule) et, par conséquent, pour une rotation spécifiquement mise en oeuvre via le rotor 1 dans le sens horaire dans l'exemple de la figure 6 où les orifices 211a et 212a sont agencés du côté droit de la droite radiale de chaque cellule 210 pour un observateur positionné au-dessus du dispositif ; et
- à la figure 7, la petite base 213' et la grande base 214' forment respectivement les côtés radialement interne et externe de chaque cellule 210' pourvus des orifices d'entrée/ sortie 211a' et 212a', ces cellules 210' étant spécifiquement conçues pour un écoulement de liquide uniquement descendant (i.e. de la petite base 213' à la grande base 214', pour favoriser l'atomisation et la coalescence des gouttelettes dans les zones d'entrée et de sortie) et, par conséquent, pour une rotation spécifiquement mise en oeuvre via le rotor 1 dans le sens antihoraire dans l'exemple de la figure 7 où les orifices 211a' et 212a' sont également agencés du côté droit de la droite radiale de chaque cellule 210' pour un observateur positionné au-dessus du dispositif.

On notera que le sens de rotation des anneaux 203, 203' selon ce second mode est ainsi prédéterminé de manière univoque par la géométrie asymétrique de chaque cellule 210, 210', laquelle est adaptée pour un seul sens d'écoulement du liquide, tout en remarquant que les sens de rotations horaire ou antihoraire respectivement dictés par ces écoulements ascendants ou descendants seraient inversés dans le cas d'orifices d'entrée/ sortie de cellules agencés non pas à droite, mais à gauche de ladite droite radiale, à titre de variantes des figures 6 et 7.

D'une manière générale, on notera que la géométrie des cellules 110, 110' et 210, 210' et des canaux 111, 112, 111', 112', 211, 212, 211', 212' illustrés aux figures 4 à 7 selon l'invention n'est nullement limitative, et que les portions de raccordement sensiblement radiales de ces canaux aux cellules correspondantes pourraient présenter des orientations et/ou des longueurs différentes. En particulier, les tronçons intermédiaires de ces canaux 111, 112, 111', 112', 211, 212, 211', 212' qui sont sur ces figures deux à deux perpendiculaires et au nombre de trois pourraient présenter des orientations et/ou des longueurs relatives également différentes de celles illustrées.

## Revendications

1. Dispositif de chromatographie de partage centrifuge d'un liquide à au moins deux phases, le dispositif comportant au moins un anneau plat (103, 103', 203, 203') qui est apte à être entraîné en rotation autour de son axe (X'X) de symétrie et qui comprend une multitude de cellules (110, 110', 210, 210') destinées à être parcourues par le liquide, chaque cellule étant pourvue de deux canaux d'entrée/ sortie (111 et 112, 111' et 112', 211 et 212, 211' et 212') qui sont destinés à faire circuler le liquide d'une cellule à une autre et qui débouchent respectivement par deux orifices d'entrée/ sortie (111a et 112a, 111a' et 112a', 211 a et 212a, 211a' et 212a') de la cellule en deux côtés radialement interne et externe (113 et 114, 113' et 114', 213 et 214, 213' et 214') de cette dernière par rapport audit axe de rotation, **caractérisé en ce que** pour au moins une partie de cette multitude de cellules, lesdits orifices débouchant dans une même cellule sont agencés d'un même côté latéral d'une droite radiale (D) de l'anneau passant par ledit axe et par le barycentre (G) de cette cellule, vue en section radiale.

2. Dispositif selon la revendication 1, **caractérisé en ce que** chaque cellule (110, 110', 210, 210') du ou de chaque anneau (103, 103', 203, 203') a ses deux orifices d'entrée/ sortie (111 a et 112a, 111 a' et 112a', 211 a et 212a, 211a' et 212a') agencés d'un même côté latéral de ladite droite radiale (D).

3. Dispositif selon la revendication 1 ou 2, **caractérisé en ce que**, pour une même cellule (110, 110', 210, 210'), la distance minimale entre ladite droite radiale (D) et celui des deux orifices (111 a et 112a, 111 a' et 112a', 211a et 212a, 211a' et 212a') qui est le plus proche de cette droite est supérieure à la largeur de chaque orifice.

4. Dispositif selon la revendication 3, **caractérisé en ce que**, pour une même cellule (110, 110', 210, 210'), le ratio de cette distance minimale sur la longueur de chacun desdits côtés de cellule radialement interne et externe (113 et 114, 113' et 114', 213 et 214, 213' et 214') est supérieur ou égal à 5%.

5. Dispositif selon la revendication 4, **caractérisé en ce que**, pour une même cellule (110, 110', 210, 210'), ce ratio est supérieur ou égal à 30%.

6. Dispositif selon une des revendications 1 à 5, **caractérisé en ce que** lesdits côtés (113 et 114, 113' et 114') de chaque cellule (110, 110') pourvus des orifices d'entrée/ sortie (111a et 112a, 111a' et 112a') correspondants sont symétriques l'un de l'autre par rapport à un axe de symétrie de cette cellule, le ou chaque anneau (103, 103') étant par exemple destiné à être entraîné indifféremment dans le sens horaire (A) pour un écoulement du liquide à travers la cellule allant du côté radialement externe (114, 114') vers le côté radialement interne (113, 113'), ou bien dans le sens antihoraire (B) pour un écoulement du liquide en sens inverse.

7. Dispositif selon la revendication 6, **caractérisé en ce que** chaque cellule (110, 110') présente une forme sensiblement polygonale vue en section radiale, par exemple sensiblement rectangulaire ou hexagonale, ou bien sensiblement elliptique.

8. Dispositif selon une des revendications 1 à 5, **caractérisé en ce que** lesdits côtés (213 et 214, 213' et 214') de chaque cellule (210, 210') pourvus des orifices d'entrée/ sortie (211a et 212a, 211a' et 212a') correspondants sont asymétriques l'un par rapport à l'autre, le ou chaque anneau (203, 203') étant par exemple destiné à être entraîné :
- seulement dans le sens horaire pour un écoulement du liquide à travers la cellule allant du côté radialement externe (214) vers le côté radialement interne (213), si ce côté interne présente une longueur supérieure à celle du côté externe, ou bien
- seulement dans le sens antihoraire pour un écoulement du liquide en sens inverse si ce côté interne (213') présente une longueur inférieure à cette du côté externe (214').

9. Dispositif selon la revendication 8, **caractérisé en ce que** chaque cellule (210, 210') présente une forme sensiblement trapézoïdale vue en section radiale, dont les grande et petite bases sont respectivement formées par lesdits côtés de cellule (213 et 214, 214' et 213') pourvus desdits orifices d'entrée/ sortie (211 a et 212a, 212a' et 211a').

10. Dispositif selon une des revendications précédentes, **caractérisé en ce qu'**il comporte une multitude desdits anneaux plats (3a, 103, 103', 203, 203').

11. Procédé de chromatographie de partage centrifuge d'un liquide à au moins deux phases mis en oeuvre par un dispositif selon une des revendications précédentes, **caractérisé en ce que** l'on choisit le sens de rotation du ou de chaque anneau (103, 103', 203, 203') autour dudit axe de rotation (X'X) en fonction du sens d'écoulement du liquide à travers chaque cellule (110, 110', 210, 210'), de telle manière que l'on entraîne le ou chaque anneau dans le sens horaire (A) si le liquide s'écoule dudit côté de cellule radialement externe (114, 114', 214) vers ledit côté de cellule radialement interne (113, 113', 213) ou bien dans le sens antihoraire (B) si le liquide s'écoule en sens inverse, ou vice versa si lesdits orifices d'entrée/ sortie (111a et 112a, 111a' et 112a', 211 a et 212a, 211a' et 212a') de chaque cellule sont agencés de l'autre côté latéral de ladite droite radiale (D).

12. Procédé selon la revendication 11, **caractérisé en ce que** l'on entraîne le ou chaque anneau (203) dans le sens horaire, si le liquide s'écoule du côté radialement externe (214) vers le côté radialement interne (213) de chaque cellule (210) et si ce côté radialement interne présente une longueur supérieure à celle du côté radialement externe, ou inversement si lesdits orifices d'entrée/ sortie (211a et 212a) de chaque cellule sont agencés de l'autre côté latéral de ladite droite radiale.

13. Procédé selon la revendication 11, **caractérisé en ce que** l'on entraîne le ou chaque anneau (203') dans le sens antihoraire, si le liquide s'écoule du côté radialement interne (213') vers le côté radialement externe (214') de chaque cellule (210') et si ce côté radialement interne présente une longueur inférieure à celle du côté radialement externe, ou inversement si lesdits orifices d'entrée/ sortie (211a' et 212a') de chaque cellule sont agencés de l'autre côté latéral de ladite droite radiale.

## Claims

1. A centrifugal partition chromatography device for a liquid having at least two phases, the device comprising at least one flat ring (103, 103', 203, 203') which is capable of being rotated about its axis (X'X) of symmetry and which comprises a multitude of cells (110, 110', 210, 210') intended to be passed through by the liquid, each cell being provided with two inlet/outlet channels (111 and 112, 111' and 112', 211 and 212, 211' and 212') which are intended to make the liquid flow from one cell to another and which open respectively via two inlet/outlet orifices (111a and 112a, 111a' and 112a', 211a and 212a, 211a' and 212a') of the cell on two radially inner and outer sides (113 and 114, 113' and 114', 213 and 214, 213' and 214') of the latter relative to said axis of rotation, **characterized in that** for at least one portion of this multitude of cells, said orifices opening into one and the same cell are arranged on a same lateral side of a radial straight line (D) of the ring that passes through said axis and through the barycentre (G) of this cell, seen in radial cross section.

2. The device as claimed in claim 1, **characterized in that** each cell (110, 110', 210, 210') of the or each ring (103, 103', 203, 203') has its two inlet/outlet orifices (111a and 112a, 111a' and 112a', 211a and 212a, 211a' and 212a') arranged on a same lateral side of said radial straight line (D).

3. The device as claimed in claim 1 or 2, **characterized in that**, for a same cell (110, 110', 210, 210'), the minimum distance between said radial straight line (D) and that of the two orifices (111a and 112a, 111a' and 112a', 211a and 212a, 211a' and 212a') which is closest to this straight line is greater than the width of each orifice.

4. The device as claimed in claim 3, **characterized in that**, for a same cell (110, 110', 210, 210'), the ratio of this minimum distance to the length of each of said radially inner and outer cell sides (113 and 114, 113' and 114' , 213 and 214, 213' and 214') is greater than or equal to 5%.

5. The device as claimed in claim 4, **characterized in that**, for a same cell (110, 110', 210, 210'), this ratio is greater than or equal to 30%.

6. The device as claimed in one of claims 1 to 5, **characterized in that** said sides (113 and 114, 113' and 114') of each cell (110, 110') provided with corresponding inlet/outlet orifices (111a and 112a, 111a' and 112a') are symmetrical to one another with respect to an axis of symmetry of this cell, the or each ring (103, 103') being, for example, intended to be rotated either in the clockwise direction (A) for a flow of liquid through the cell going from the radially outer side (114, 114') toward the radially inner side (113, 113'), or else in the anticlockwise direction (B) for a flow of liquid in the reverse direction.

7. The device as claimed in claim 6, **characterized in that** each cell (110, 110') has a substantially polygonal shape seen in radial cross section, for example substantially rectangular or hexagonal, or else substantially elliptical.

8. The device as claimed in one of claims 1 to 5, **characterized in that** said sides (213 and 214, 213' and 214') of each cell (210, 210') provided with corresponding inlet/outlet orifices (211a and 212a, 211a' and 212a') are asymmetrical with respect to one another, the or each ring (203, 203') being, for example, intended to be rotated:
- only in the clockwise direction for a flow of liquid through the cell going from the radially outer side (214) toward the radially inner side (213), if this inner side has a length greater than that of the outer side, or else
- only in the anticlockwise direction for a flow of liquid in the reverse direction if this inner side (213') has a length less than that of the outer side (214').

9. The device as claimed in claim 8, **characterized in that** each cell (210, 210') has a substantially trapezoidal shape seen in radial cross section, the large and small bases of which are respectively formed by said cell sides (213 and 214, 214' and 213') provided with said inlet/outlet orifices (211a and 212a, 212a' and 211a').

10. The device as claimed in one of the preceding claims, **characterized in that** it comprises a multitude of said flat rings (3a, 103, 103', 203, 203').

11. A centrifugal partition chromatography process for a liquid having at least two phases used by a device as claimed in one of the preceding claims, **characterized in that** the direction of rotation of the or each ring (103, 103', 203, 203') about said axis of rotation (X'X) is chosen as a function of the flow direction of the liquid through each cell (110, 110', 210, 210') so that the or each ring is rotated in the clockwise direction (A) if the liquid flows from said radially outer cell side (114, 114', 214) toward said radially inner cell side (113, 113', 213) or else in the anticlockwise direction (B) if the liquid flows in the reverse direction, or vice versa if said inlet/outlet orifices (111a and 112a, 111a' and 112a', 211a and 212a, 211a' and 212a') of each cell are arranged on the other lateral side of said radial straight line (D).

12. The process as claimed in claim 11, **characterized in that** the or each ring (203) is rotated in the clockwise direction if the liquid flows from the radially outer side (214) toward the radially inner side (213) of each cell (210) and if this radially inner side has a length greater than that of the radially outer side, or conversely if said inlet/outlet orifices (211a and 212a) of each cell are arranged on the other lateral side of said radial straight line.

13. The process as claimed in claim 11, **characterized in that** the or each ring (203') is rotated in the anticlockwise direction if the liquid flows from the radially inner side (213') toward the radially outer side (214') of each cell (210') and if this radially inner side has a length less than that of the radially outer side, or conversely if said inlet/outlet orifices (211a' and 212a') of each cell are arranged on the other lateral side of said radial straight line.

## Patentansprüche

1. Vorrichtung zur Zentrifugaltrennungschromatographie einer Flüssigkeit mit wenigstens zwei Phasen, wobei die Vorrichtung wenigstens einen flachen Ring (103, 103', 203, 203') aufweist, welcher dazu ausgestaltet ist, zur Rotation um seine Symmetrieachse (X'X) angetrieben zu werden, und welcher eine Vielzahl von Zellen (110, 110', 210, 210') umfasst, welche dazu bestimmt sind, von der Flüssigkeit durchlaufen zu werden, wobei jede Zelle mit zwei Kanälen zum Eingang/Ausgang (111 und 112, 111' und 112', 211 und 212, 211' und 212') versehen ist, welche dazu bestimmt sind, die Flüssigkeit von einer Zelle in eine andere zirkulieren zu lassen, und welche jeweils durch zwei Öffnungen zum Eingang/Ausgang (111a und 112a, 111a' und 112a', 211a und 212a, 211a' und 212a') der Zelle an zwei radial inneren und äußeren Seiten (113 und 114, 113' und 114', 213 und 214, 213' und 214') der letzteren bezüglich der Rotationsachse münden, **dadurch gekennzeichnet, dass** für wenigstens einen Teil dieser Vielzahl von Zellen die in der selben Zelle mündenden Öffnungen an einer selben lateralen Seite einer radialen Geraden (D) des Rings angeordnet sind, welche durch die Achse und, im radialen Querschnitt gesehen, durch den Schwerpunkt (G) dieser Zelle verläuft.

2. Vorrichtung nach Anspruch 1, **dadurch gekennzeichnet, dass** jede Zelle (110, 110', 210, 210') des oder jedes Rings (103, 103', 203, 203') ihre zwei Öffnungen zum Eingang/Ausgang (111a und 112a, 111a' und 112a', 211a und 212, 211a' und 212a') an einer selben lateralen Seite der radialen Geraden (D) angeordnet hat.

3. Vorrichtung nach Anspruch 1 oder 2, **dadurch gekennzeichnet, dass** für eine selbe Zelle (110, 110', 210, 210') der minimale Abstand zwischen der radialen Geraden (D) und derjenigen der zwei Öffnungen (111a und 112a, 111a' und 112a', 211a und 212a, 211a' und 212a'), welche am nächsten an dieser Geraden liegt, größer als die Weite jeder Öffnung ist.

4. Vorrichtung nach Anspruch 3, **dadurch gekennzeichnet, dass**, für eine selbe Zelle (110, 110', 210, 210') das Verhältnis dieses minimalen Abstands über der Länge von jeder der radial inneren und äußeren Seiten der Zelle (113 und 114, 113' und 114', 213 und 214, 213' und 214') größer oder gleich 5 % ist.

5. Vorrichtung nach Anspruch 4, **dadurch gekennzeichnet, dass** für eine selbe Zelle (110, 110', 210, 210') dieses Verhältnis größer oder gleich 30 % ist.

6. Vorrichtung nach einem der Ansprüche 1-5, **dadurch gekennzeichnet, dass** die Seiten (113 und 114, 113' und 114') jeder Zelle (110, 110'), welche mit entsprechenden Öffnungen zum Eingang/Ausgang (111a und 112a, 111a' und 112a') versehen sind, zueinander bezüglich einer Symmetrieachse dieser Zelle symmetrisch sind, wobei der oder jeder Ring (103, 103') zum Beispiel dazu bestimmt ist, unterschiedslos für eine Strömung der Flüssigkeit durch die Zelle, welche von der radial äußeren Seite (114, 114') in Richtung der radial inneren Seite (113, 113') verläuft, im Uhrzeigersinn (A) oder aber für eine Strömung der Flüssigkeit in umgekehrter Richtung im Gegenuhrzeigersinn (B) angetrieben zu werden.

7. Vorrichtung nach Anspruch 6, **dadurch gekennzeichnet, dass** jede Zelle (110, 110') eine im radialen Querschnitt gesehen im Wesentlichen polygonale, beispielsweise im Wesentlichen rechteckige oder hexagonale, oder aber im Wesentlichen elliptische Form aufweist.

8. Vorrichtung nach einem der Ansprüche 1-5, **dadurch gekennzeichnet, dass** die Seiten (213 und 214, 213' und 214') jeder Zelle (210, 210'), welche mit entsprechenden Öffnungen zum Eingang/Ausgang (211a und 212a, 211a' und 212a') versehen sind, asymmetrisch zueinander sind, wobei der oder jeder Ring (203, 203') beispielsweise dazu bestimmt ist, angetrieben zu werden:
- ausschließlich im Uhrzeigersinn für eine Strömung der Flüssigkeit durch die Zelle, welche von der radial äußeren Seite (214) in Richtung der radial inneren Seite (213) verläuft, wenn diese innere Seite eine größere Länge aufweist als diejenige der externen Seite, oder aber
- ausschließlich im Gegenuhrzeigersinn für eine Strömung der Flüssigkeit in der umgekehrten Richtung, wenn die innere Seite (213') eine geringere Länge als diejenige der äußeren Seite (214') aufweist.

9. Vorrichtung nach Anspruch 8, **dadurch gekennzeichnet, dass** jede Zelle (210, 210') eine im radialen Querschnitt gesehen im Wesentlichen trapezartige Form aufweist, von welcher die große und kleine Basis jeweils gebildet sind durch die Seiten der Zelle (213 und 214, 214' und 213'), welche mit den Öffnungen zum Eingang/Ausgang (211a und 212a, 212a' und 211a') versehen sind.

10. Vorrichtung nach einem der vorhergehenden Ansprüche, **dadurch gekennzeichnet, dass** sie eine Vielzahl der flachen Ringe (3a, 103, 103', 203, 203') aufweist.

11. Verfahren zur Zentrifugaltrennungschromatographie einer Flüssigkeit mit wenigstens zwei Phasen, welches eine Vorrichtung nach einem der vorhergehenden Ansprüche einsetzt, **dadurch gekennzeichnet, dass** die Rotationsrichtung des oder jedes Rings (103, 103', 203, 203') um die Rotationsachse (X', X) abhängig von der Strömungsrichtung der Flüssigkeit durch jede Zelle (110, 110', 210, 210') ausgewählt wird, sodass der oder jeder Ring im Uhrzeigersinn (A) angetrieben wird, wenn die Flüssigkeit von der radial äußeren Seite der Zelle (114, 114', 214) in Richtung der radial inneren Seite der Zelle (113, 113', 213) strömt, oder aber im Gegenuhrzeigersinn (B) angetrieben wird, wenn die Flüssigkeit in umgekehrter Richtung strömt, oder umgekehrt, wenn die Öffnungen zum Eingang/Ausgang (111a und 112a, 111a' und 112a', 211a und 212a, 211a' und 212a') jeder Zelle an der anderen lateralen Seite der radialen Geraden (D) angeordnet sind.

12. Verfahren nach Anspruch 11, **dadurch gekennzeichnet, dass** der oder jeder Ring (203) im Uhrzeigersinn angetrieben wird, wenn die Flüssigkeit von der radial äußeren Seite (214) in Richtung der radial inneren Seite (213) jeder Zelle (210) strömt und wenn diese radial innere Seite eine größere Länge als diejenige der radial äußeren Seite aufweist, oder umgekehrt, wenn die Öffnungen zum Eingang/Ausgang (211a und 212a) jeder Zelle an der anderen lateralen Seite der radialen Geraden angeordnet sind.

13. Verfahren nach Anspruch 11, **dadurch gekennzeichnet, dass** der oder jeder Ring (203') im Gegenuhrzeigersinn angetrieben wird, wenn die Flüssigkeit von der radial inneren Seite (213') in Richtung der radial äußeren Seite (214') jeder Zelle (210') strömt und wenn diese radial innere Seite eine geringere Länge als diejenige der radial äußeren Seite aufweist, oder umgekehrt, wenn die Öffnungen zum Eingang/Ausgang (211a' und 212a') jeder Zelle an der anderen lateralen Seite der radialen Geraden angeordnet sind.
